# EUROPEAN PATENT APPLICATION

(11) **EP 1 094 388 A2**
(43) Date of publication of application: **25.04.2001**
(21) Application number: 00309248.3
(22) Date of filing: 20.10.2000
(51) Int. Cl.: G06F 9/46, G06F 9/44

(54) **Graphical message exchange system**

(30) Priority: 22.10.1999 JP 30174499
(71) Applicant: Kizna.com Inc., Delaware 19801 (US)
(72) Inventor: Miyazawa, Yoichi, Aizuwakamatsu-shi, Fukushima 965-0873 (JP); Okada, Tetsuya, Aizuwakamatsu-shi, Fukushima 965-0873 (JP)
(74) Representative: Brown, Kenneth Richard

(57) **Abstract**

The conventional destination setting operation of electronic mail is not graphical. The present invention provides a graphical user interface which has excellent operability in a message exchange means. In a client server system, the above mentioned server comprises a transmit/receive portion, an icon transfer portion which transfers an icon received by the transmit/receive portion to another client, and a screen creation portion which receives an icon from the transmit/receive portion and creates a message board screen, and the above mentioned client comprises a transmit/receive portion, an icon creation portion which sends a transmission icon to the transmit/receive portion, and a screen creation portion which receives an icon received by the transmit/receive portion and/or an icon created by the icon creation portion and creates a message board screen, wherein when the above mentioned client has newly created an icon, the client displays the icon on its own message board screen and sends this icon to the above mentioned server, and the server receives the icon, displays the icon on its own message board screen and transfers the icon to another client. The destination can be set by placing icons on the screen.

## Description

### BACKGROUND OF THE INVENTION

### 1. Field of the Invention

The present invention relates to a client server system comprising a server and a plurality of clients connected to the server via communication lines, wherein messages can be easily exchanged using icons. The present invention also relates to an authoring tool thereof and applied system thereof.

### 2. Description of the Related Art

Electronic mail is widely known as a typical message exchange means in a client server system.

In conventional electronic mail, destination should be input using an address book or by other means. This operation is not graphical. Many user interfaces of current computers, on the other hand, are graphical, easily understood and have excellent operability as in systems in which icons are dragged and dropped. A graphical user interface with excellent operability has also been desired for message exchange means.

### SUMMARY OF THE INVENTION

It is an object of the present invention to solve the above problems.

The present invention is a client server system comprising a server and a plurality of clients which are connected to the server via communication lines, wherein common screens are displayed on the server and on the plurality of clients, common icons are displayed on the screens of the server and of the plurality of clients, the client server system has mapping which can divide areas in the background, and the common screens and common icons of the server and of the plurality of clients are created and displayed according to this mapping.

The present invention is a client server system, comprising a server and a plurality of clients connected to the server via communication lines, wherein the above mentioned server further comprises a transmit/receive portion, an icon transfer portion which transfers an icon received by the transmit/receive portion to another client, and a screen creation portion which receives an icon from the transmit/receive portion and creates a message board screen, the above mentioned client further comprises a transmit /receive portion, an icon creation portion which sends a transmission icon to the transmit /receive portion, and a screen creation portion which receives the icon received by the transmit /receive portion and/or an icon created by the icon creation portion and creates a message board screen, when the client has newly created an icon, the client displays the icon on its own message board screen and sends the icon to the server, and the above mentioned server receives the icon, displays the icon on its own message board, and transfers the icon to another client.

It is preferable that when the icon (message) is received the above mentioned server judges the attributes of the received icon (message), sends the icon (message) to a corresponding client if the icon is a private icon, and sends the icon to all the clients if the icon is a multiple address message.

It is preferable that the above mentioned server and/or the client further comprises a private area screen creation portion which creates a private area screen where access is allowed only for specified persons, a public area creation portion which creates a public area screen where access is allowed for all participants, an area decision portion which receives operation information on the icon and decides which one of the private area screen and the public area screen this operation is executed in, and a security control portion which allows access to the icon based on the result of the decision by the area decision portion.

The types of the above mentioned access are, for example, read, edit, move, delete and copy. The above mentioned private area screen is, for example, provided to each client. That is, so to speak, a post office box. The above mentioned public area screen corresponds to, for example, a public bulletin board.

When, for example, the operation of clicking on an icon is executed on any one of the private area screens, the relationship between the corresponding client and the operated client is checked, and if the result of this is that the operated client has an access right access is allowed, otherwise access is denied. If the operation of clicking on an icon is executed on the public area screen, access is allowed.
The security control portion stores a permission table which shows the relationship between a user type and a permission type, and decides whether access is permitted/denied based on this table. A similar table is also used for controlling icons at the bottom of the screen.

It is preferable if the above mentioned icons can be moved inside or between the private area screen and/or the public area screen by a drag and drop operation, and the area where the icon is placed corresponds to the destination of the icon and/or message.

By dragging and dropping an icon, the addressing of a message can be executed visually, intuitively and directly.

It is preferable if the above mentioned icons can be provided in advance on an icon bar on the display screen, and can be placed in an arbitrary area from the icon bar by a drag and drop operation.

The present invention is an authoring tool for a client server system comprising a server and a plurality of clients connected to the server via communication lines, wherein common screens are displayed on the server and on the plurality of clients, common icons are displayed on the screens of the server and of the plurality of clients, the common screens and the common icons of the server and of the plurality of clients are created and displayed according to mapping, the above mentioned mapping comprises an area table where a screen is divided and defined as one or more areas, and a permission table where security is set for each combination of a user type and an access permission type, and an application is generated by setting the area table and the permission table.

The present invention is a messaging system for a client server system comprising a server and a plurality of clients connected to the server via communication lines, wherein the above mentioned server further comprises a transmit /receive portion, an icon transfer portion which transfers an icon received by the transmit /receive portion to another client, and a screen creation portion which receives an icon from the transmit /receive portion and creates a message board screen, the above mentioned client further comprises a transmit /receive portion, an icon creation portion which sends a transmission icon to the transmit /receive portion, and a screen creation portion which receives an icon received by the transmit /receive portion and/or an icon created by the icon creation portion and creates a message board screen, when the above mentioned client has newly created an icon, the client displays the icon on its own message board screen and sends the icon to the server, the above mentioned server receives the icon, displays the icon on its own message board screen, and transfers the icon to another client, the above mentioned server and/or the client further comprises a private area screen creation portion which creates a private area screen where access is allowed only for specified persons, a public area creation portion which creates a public area screen where access is allowed for all participants, an icon area screen creation portion which allows one of a plurality of icons provided on the display screen in advance to be placed in an arbitrary area by dragging and dropping the icon, an area decision portion which receives operation information on the icon and decides which one of the private area screen and the public area screen this operation was executed in, and a security control portion which allows access to the icon based on the result of the decision by the area decision portion, the above mentioned icon includes a message, the above mentioned icon can be moved inside or between the private area screen and/or the public area screen by a drag and drop operation, and the area where the icon is placed is specified as the destination of the message, and only a client which has obtained permission from the security control portion can read the message.

The present invention is also an order system for a client server system comprising a server and a plurality of clients connected to the server via communication lines, wherein the above mentioned server further comprises a transmit /receive portion, and a screen creation portion which receives an icon from the transmit /receive portion and creates a message board screen, the above mentioned client further comprises a transmit /receive portion, an icon creation portion which sends a transmission icon to the transmit /receive portion, and a screen creation portion which receives an icon received by the transmit /receive portion and/or an icon created by the icon creation portion and creates a message board screen, when the above mentioned client has newly created an icon, the client displays the icon on its own message board screen and sends the icon to the server, the above mentioned server receives the icon and displays the icon on its own message board screen, the above mentioned client further comprises an information area creation portion for creating an information area screen to display information on commodities, and an icon area screen creation portion for allowing an order icon provided on the display screen in advance to be placed in any one of the information areas by dragging and dropping, and the above mentioned server further comprises an information area creation portion for creating an information area screen to display information on commodities, and an icon area screen creation portion for enabling an order confirmation icon provided on the display screen in advance to be placed in association with the order icon by dragging and dropping.

In the icon area of the client, a question icon and a trash can icon, for example, are provided other than an order icon. In the icon area of the server, a discount icon, new commodity icon, sold out icon, information icon and trash can icon, for example, are provided other than the order confirmation icon.

### BRIEF DESCRIPTION OF THE DRAWINGS

Fig. 1 is a general block diagram depicting the system of embodiment 1;
Fig. 2 is a conceptual diagram depicting the system of embodiment 1;
Fig. 3 is a diagram depicting the general processing of the system of embodiment 1;
Fig. 4 is a flowchart depicting the processing of the client of the system of embodiment 1;
Fig. 5 is a flowchart depicting the processing of the server of the system of embodiment 1;
Fig. 6 is a flowchart depicting the processing of another client of the system of embodiment 1;
Fig. 7 is a flowchart depicting the security processing of the system of the 1;
Fig. 8 is an example of a display screen of the message board system according to embodiment 1;
Fig. 9 is an example of the permission flags of the message board system according to embodiment 1;
Fig. 10 is an example of the permission flags of the message board without security of the message board system according to embodiment 1;
Fig. 11 is an example of the permission flags of the message board with a medium degree of security of the message board system according to embodiment 1;
Fig. 12 is a diagram depicting the definition of icons of the message board system according to embodiment 1;
Fig. 13 is an example of icons of the message board system according to embodiment 1;
Fig. 14 is an example of the definition of icons of the message board in Fig. 13 according to embodiment 1;
Fig. 15 is a functional block diagram depicting the image generation of the post office box system according to embodiment 2;
Fig. 16 is a processing flow chart depicting the security of the post office box system according to embodiment 2;
Fig. 17 is an example of a display screen of the post office box system according to embodiment 2;
Fig. 18 is a diagram depicting the definition of an image map of the post office box system according to embodiment 2;
Fig. 19 is an example of the permission flags for each user area of the post office box system according to embodiment 2;
Fig. 20 is an example of the permission flags for all the users of the post office box system according to embodiment 2;
Fig. 21 is an example of the layout of an icon bar of the screen of the post office box system according to embodiment 2;
Fig. 22 is an example of the display/permission flags of the user icons of the post office system according to embodiment 2;
Fig. 23 is an example of the display/permission flags of the NOTE and TRASH icons of the post office box system according to embodiment 2;
Fig. 24 is an example of another icon of the post office box system according to embodiment 2;
Fig. 25 is an example of the display/permission flags of each user of another post office box system according to embodiment 2;
Fig. 26 is an example of the display/permission flags of the NOTE and TRASH icons of the post office box system according to embodiment 2;
Fig. 27 is an example of the shop side screen of the order system according to embodiment 3;
Fig. 28 is an example of the customer side screen of the order system according to embodiment 3;
Fig. 29 is a diagram depicting the image map definition of the order system according to embodiment 3;
Fig. 30 is an example of the image map definition of the order system according to embodiment 3;
Fig. 31 is an example of the icon bar of the shop side screen of the order system according to embodiment 3;
Fig. 32 is an example of the icon bar of the customer side screen of the order system according to embodiment 3;
Fig. 33 is an example of the display/permission flags of the customer side icons (ORDER and HELP icons) of the order system according to embodiment 3;
Fig. 34 is an example of the display/permission flags of the shop side icons (ACCEPT, DISCOUNT, NEW and INFO icons) of the order system according to embodiment 3;
Fig. 35 is an example of the display/permission flags of the trash can icon of the order system according to embodiment 3;
Fig. 36 is an example of the display screen of the destination display panel according to embodiment 4; and
Fig. 37 is an example of the display screen of the positional information display panel according to embodiment 4.

### DESCRIPTION OF THE PREFERRED EMBODIMENTS

### Embodiment 1

The system according to an embodiment of the present invention is an icon-driven server/client system for transmitting/receiving messages in real-time. The major difference from a conventional system is that a message is addressed intuitively and directly by dragging and dropping an icon. The system according to this embodiment provides a new communication and joint work method for the Internet/intranet community.

This system can be used very easily. By merely accessing the server, the user can use the later mentioned boards, such as a message board, a white board and a chess board, a map and an image can be used at any time, and can write a desired message and share it with others by dragging and dropping an icon onto a board on the Internet.

The features of this system are easy to install, easy to use, and easy to customize. This system can also be used more easily than any other communication, cooperative and joint work software, including a message board, postit software, a white board, a chat room and electronic mail.

To use this system, the server should be a CGI-supported Web server, and should support java. The client should be a java-supported Web browser, and should support the virtual machine/run-time environment of java.

This system has the following major functions.
- Message creation function
   This is a function to create a message to send to a destination. For example, if an icon for sending a message is clicked on, a dialog box is displayed on the screen, and the icon and the message are linked by writing the message in this dialog box. The dialog box may be displayed not only when the icon is clicked on but also when the icon is dragged and dropped.
- Message addressing function
   This is a function to determine the destination of a message. In conventional electronic mail software, the destination should be input by characters. This function defines and manages an area on the screen corresponding to each client, and judges which area the icon is to be dragged and dropped onto, that is, judges which destination the message is addressed to.
- Security function
   This is a function to control access to an icon and/or message. This function grants permission to read, move, correct, or delete an icon and/or message. For example, a message of an icon placed in a public space can be read by anyone, but an icon placed in a private space can be read only by the specified party.
- Multiple address function
   This is a function to send a message to all users, without specifying a particular destination.
- Association function
   This is a function to set a link to related home pages, and to set and display such attributes as emergency, sold out, discount and new commodity.

This embodiment will now be described in detail with reference to the accompanying drawings.

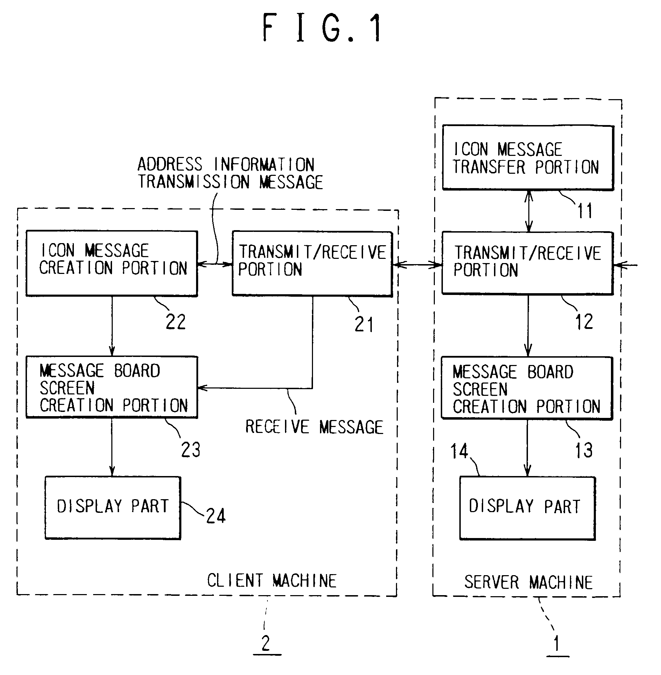

Fig. 1 is a functional block diagram depicting a configuration of a server machine 1 and a client machine 2 used for this system. The server machine 1 comprises a message transfer portion 11 which transfers a received message when necessary, a transmit /receive portion 12 for communicating with a client machine, a message board screen creation portion 13 which creates a screen of a message board based on the received message, and a display part 14 which receives the output of the screen creation portion 13 and displays the screen. The client machine 2 comprises a transmit /receive portion 21 for communicating with the server machine, a message creation portion 22 which creates a transmission message, a message board screen creation portion 23 which receives the transmission message from the message creation portion 22, receives the receive message from the transmit /receive portion 21 and displays these messages on the message board, and a display part 24 which receives the output of the screen creation portion 23 and displays the screen.

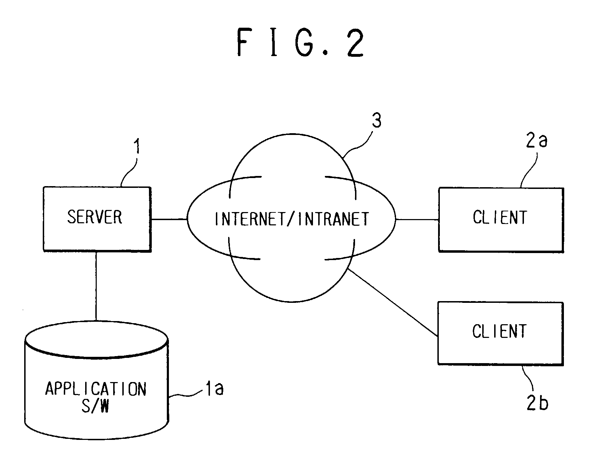

Fig. 2 is a conceptual diagram depicting the general configuration of this system. The clients 2a and 2b can access the server 1 via the Internet/intranet 3. The server 1 stores the application software (applet of Java) for this system in the external storage device la in advance. When the client accesses the server, the application software for the client is downloaded and the system can be used.

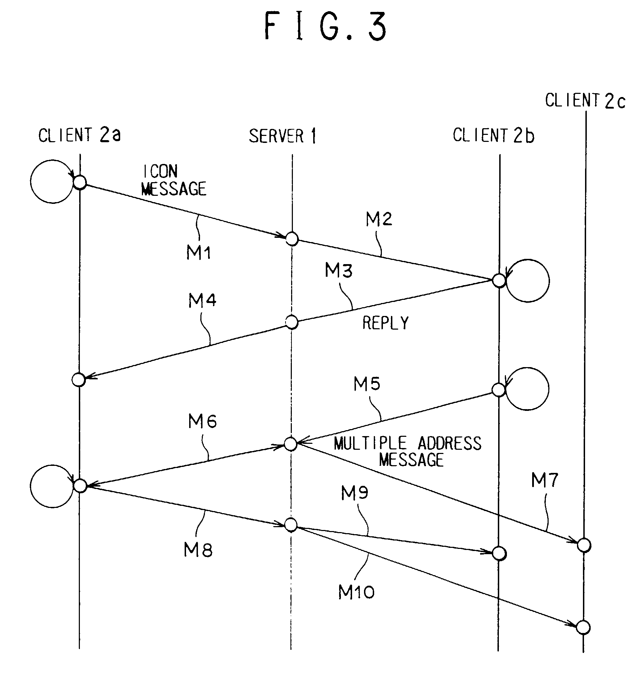

Fig. 3 shows an outline of how messages are exchanged among the server 1 and the clients 2a, 2b and 2c. When the client 2a creates a message, the message M1 is sent to the server 1, and is also displayed on its own screen. The server 1 identifies the destination of the received message M1, and sends the message M1 to the destination, which is the client 2b (M2). When the client 2b creates a reply message, the reply message is sent to the client 2a (M3, M4). When the message has multiple addresses, the message M5 sent from the server 1, is also sent to all other clients 2a and 2c (M6, M7). In the same way, the reply message M8 from the client 2a is also sent to all clients, 2b and 2c (M9, M10). In this way, a message can be communicated among all clients 2a, 2b and 2c via the server 1.

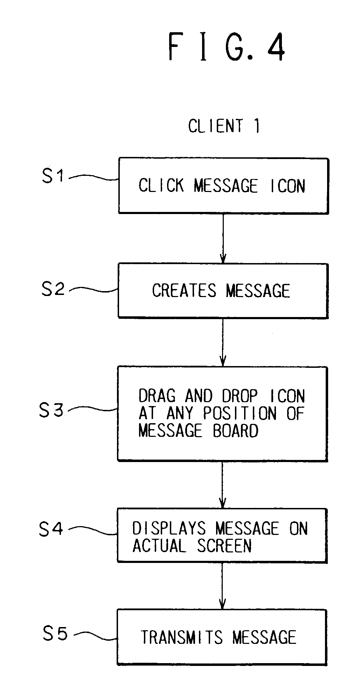

Fig. 4 shows a processing flow at the client which sends a message. At first, the user clicks on the message icon (S1), then the message creation dialog is displayed. Here the user can create an arbitrary message (S2). The user drags and drops the icon on an arbitrary position of the message board (S3). By this operation, the message can be sent. The client displays the message on its own screen (S4), and sends the message (S5).

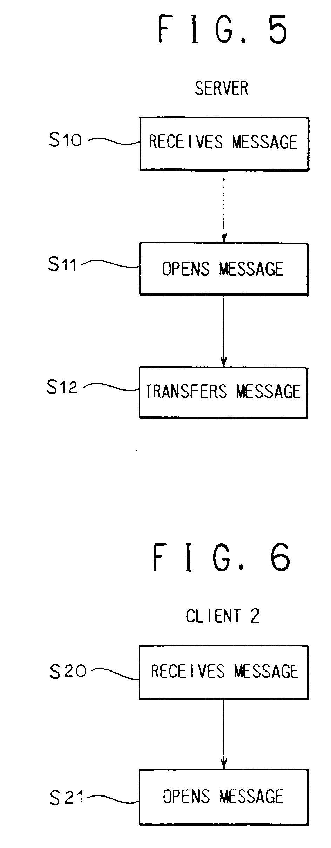

Fig. 5 shows a processing flow at the server. When the server receives a message (S10), the server opens the message (S11) and stores it in its own memory. And the server transfers the message to a predetermined destination (S12).

Fig. 6 shows a processing flow at a client which receives a message. When the client receives the message from the server (S20), the client opens the message (S21), and displays the message on its own message board.

Messages written at each client in the processing in Fig. 4 to Fig. 6 are immediately incorporated on the screens of the other clients. The transmission/receiving of messages between arbitrary clients can be synchronously known in real-time in this way. Since all information is collected at the server, management is easy.

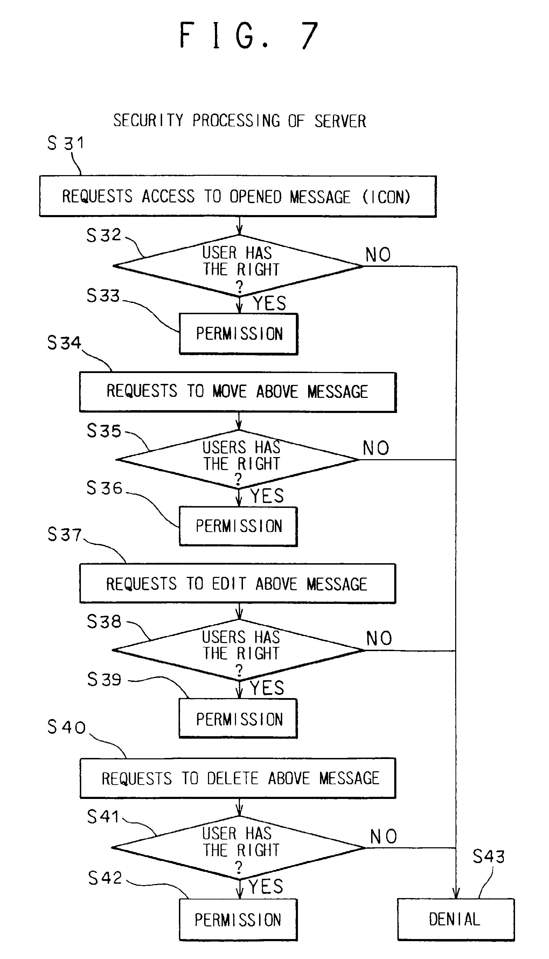

Fig. 7 shows the flow of security processing of the server. When a request to access an opened message (icon) is received (S31), the server checks whether the requesting user has the right (S32), and permits the user to access if the user has the right (S33), or denies the request if not (S43). Similar processing is also performed when moving a message (that is, changing the destination address), editing a message or deleting a message is requested (S34 - S42). For example, when this system is a bulletin board where anyone has access, accessing and moving are permitted to anyone. Editing and deleting, however, are permitted only to the message sender or to the administrator.

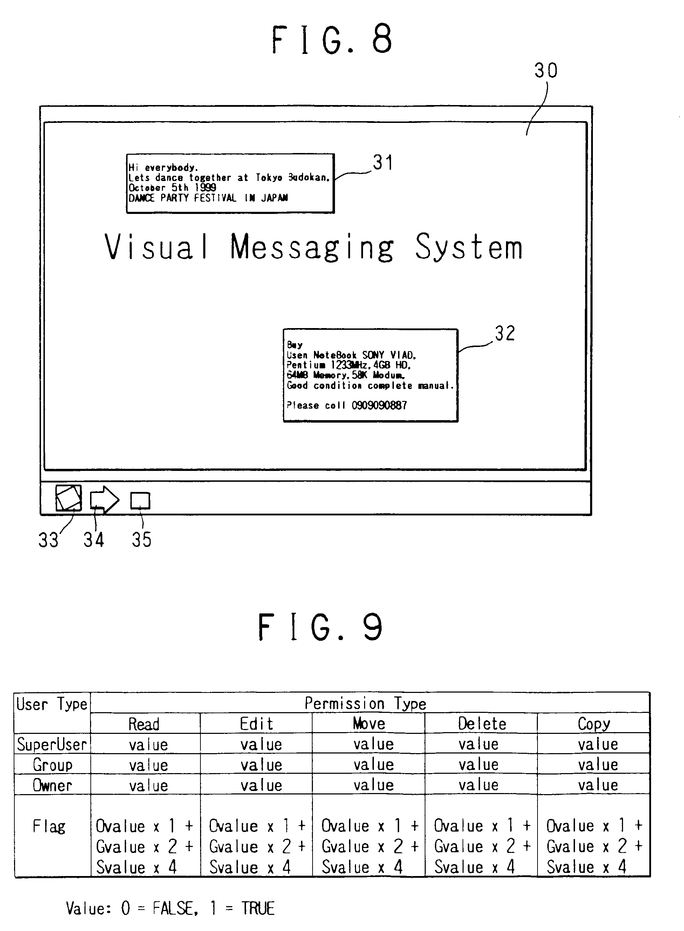

Fig. 8 is an example of a message board screen of this system. On the screen, the message board 30 and examples 31 and 32 of the messages to be displayed here are displayed. The icons 33, 34 and 35 at the bottom of the screen are the message creation icon 33, the GO icon 34 for creating a link to the related home pages, and the trash can icon 35 for deleting a message.

How to operate this system will be described on the basis of Fig. 8. To send a message, the icon 33 is clicked on and the message is created. And the icon 33 is dragged and dropped on an arbitrary position of the message board 30. Then the message opens and can be read as the examples 31 and 32. The status of this screen is the same for all clients, based on the flow shown in Fig. 3. Therefore the user can read all the messages on the screen of his own client machine. Unlike conventional multiple addresses of electronic mail, this system can send a message to all participant users without specifying destinations. Since icons are used for operation, this system can be easily and intuitively understood, and is very easy to use.

In this message board, security problems are not very serious. Anyone can create, paste and delete a message. Naturally it is easy to increase security so that only a specified individual (e.g. administrator) can move and delete messages (see Fig. 7).

The resource file format of the messaging system of the embodiment 1 will now be described.

The application of this messaging system is designed based on the following conditions.
1. Specified members. Each member has its own icon and area.
2. There is an area for all members (FORALL). In this area, all members are allowed full access (read, move, delete, copy) to a transmitted message icon in that area.
3. In the receive area of each member, only the sender or the receiver is allowed full access to a transmitted message icon.
4. A member can drag only his own icons in the icon bar.

A customizing tool to generate a resource file is provided. To define a resource file format, it is important to understand that only the user interface portion can be customized. The user interface portion can be divided into four categories.
1. Tool bar: top of the windows of this system
2. Background: middle of the windows of this system
3. Image map: A background image is divided into certain areas which are virtually defined by the image map using relative coordinates. Each area in the image map is associated with a unique member by a member ID.
4. Icon bar: Button part, which is at the bottom of the windows of this system. Each icon of the icon bar is associated with a unique member by a member ID.

The format of a resource file is as follows.
1. The resource file is an ASCII text file which can be read.
2. The resource file is stored by a java applet and is decoded/executed from the top part of one of the buttons, but resources can be defined in any sequence.
3. The syntax/keywords of a resource file are as follows.
   a. Tool bar: (NONE) / (No Toolbar)
   b. Background (imagepath)
      A background image is a super image which is placed in one directory.
   c. Image map
      Area (N) (Left-Top Coordinate, Right-Bottom Coordinate, MEMBER ID)
      If an area is FORALL, the value of MEMBER ID is ALL.
   d. Icon bar (icon path)
      An icon image is in GIF format which is placed in one directory. Icon (N) (file name, MEMBER ID, ACTION)

When all members access an icon, the value of MEMBER ID is ALL. When an icon operates as a postit (tag), the value of ACTION is POSTIT.

An example of a resource file
# Sample of RESOURCE FILE
# TOOL BAR definition
   toolbar none # No Toolbar
# BACKGROUND definition
   imagepath eyesmax/images # background image in superimage format
# IMAGEMAP definition
   region [0] 000,000 416,188 ALL # FORALL region
   region [1] 000,189 205,337 1 # Member ID 1 user region
   region [2] 000,338 205,481 2 # Member ID 2 user region
   region [3] 000,482 205,636 3 # Member ID 3 user region
   region [4] 206,189 416,337 4 # Member ID 4 user region
   region [5] 206,338 416,481 5 # Member ID 5 user region
   region [6] 206,482 416,636 6 # Member ID 6 user region
# ICONBAR definition
   iconpath Eyesmax/icons # icon images path directory
   icon [0] 1. gif 1 NONE # user icon for member ID 1, no special action
   icon [1] 2. gif 2 NONE # user icon for member ID 2, no special action
   icon [2] 3. gif 3 NONE # user icon for member ID 3, no special action
   icon [3] 4. gif 4 NONE # user icon for member ID 4, no special action
   icon [4] 5. gif 5 NONE # user icon for member ID 5, no special action
   icon [5] 6. gif 6 NONE # user icon for member ID 6, no special action
   icon [6] 7. gif ALL POSTIT #POST IT icon for all members, action as POSTIT
   icon [7] trash. gif ALL NONE # trash icon for all members, no special action
   icon [8] NONE, ALL, SHOW # Actually not an icon, COPY label for all members

Now a background image definition will be described. imagepath is as follows.
1. imagepath can be defined to be either an absolute or relative path.
2. A background image should be in super image format. Super image format is a collection of a plurality of resolutions of images compressed in JPEG format. A normal JPEG format can be converted to a super image format using the super image command from the command line.

For example, if the super image directory is "image", the image path can be defined as follows.
imagepath images # use relative path definition
Now the image map definition will be described. region [2] is a possession permission flag of Left-Top Coordinate Right-Bottom Coordinate.
1. n is an area number starting with "0".
2. Coordinate is an (x, y) coordinate related to the origin of a background image.
3. Owner is the owner of the user area, and is identified by the user ID. "0" = Super User is defined as a special user. The owner automatically becomes a receiver.
4. Permission flags are shown in Fig. 9.

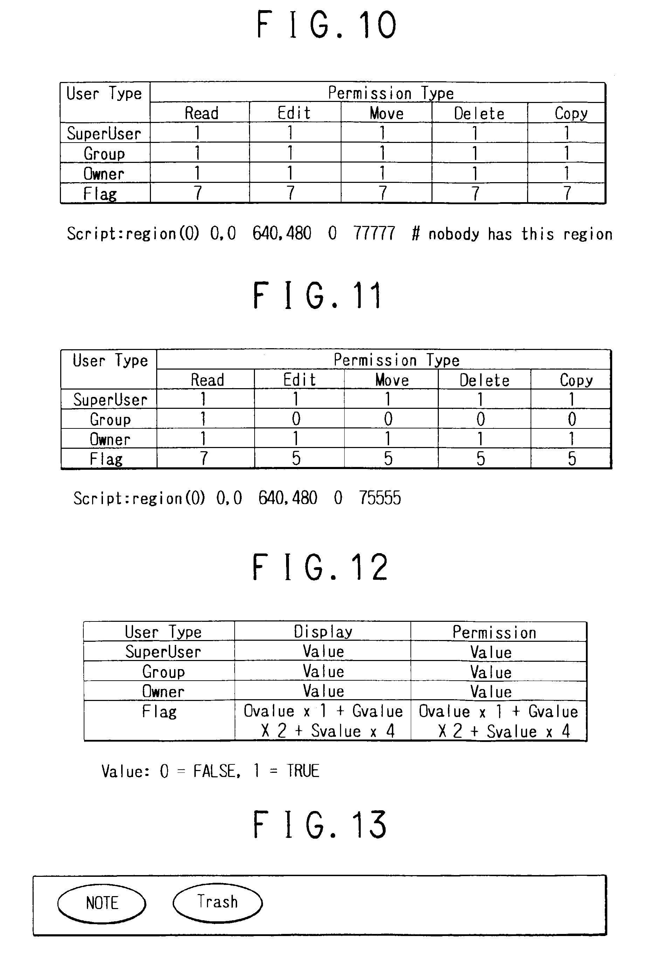

Fig. 10 is an example of the permission flags of a message board without security. In this example, anyone has full access, that is, anyone can read, edit, move, delete and copy all message icons and postits. Since the message board is a public area, the owner is the Super User by default. A permission flag value of one big area covers all message board images.

Fig. 11 is an example of the permission flags of a message board with a medium degree of security. Anyone can read all icons and postits, but only the Super User, sender and receiver has full access. In this example, Super User = Owner = Receiver. Since the message board is a public area, the owner is the Super User by default. The permission flag value of one large area covers all message board images.

Now a definition of icons will be described, that is, iconpath (icon path directory), icon [n] (on file name, off file name, owner, display flag) (see Fig. 12). Here
1. An icon path can be defined as an absolute or relative path.
2. n is an icon number.
3. on file name is a file name of an icon image in GIF format, and indicates that (a.) the owner logged in or (b.) the message (displayed by icon) has been read.
4. off file name is a file name of an icon image in GIF format, and indicates that (a.) the owner logged off or (b.) the message (displayed by icon) has not yet been read.
5. Display/permission flag defines the display and permission of an icon of the icon bar. By this, the icons can be designed to be displayed on the icon bar of all members or of only specified users.

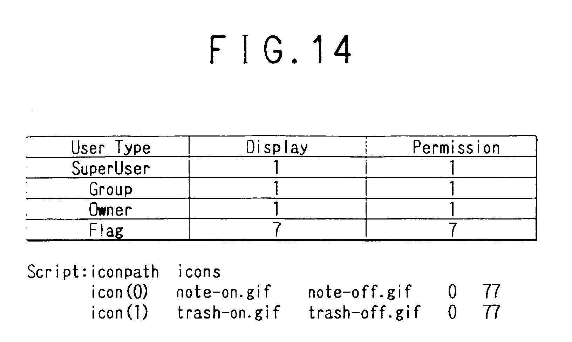

Fig. 14 is an example of the definition of the icons of the message board shown in Fig. 13. The same icon layout is used for all users, and the owner is the Super User by default. The number of users is unknown or limitless. The owner of the icons need not be the sender of the message. The message type is POSTIT. Anyone can read the message without clicking.

### Embodiment 2

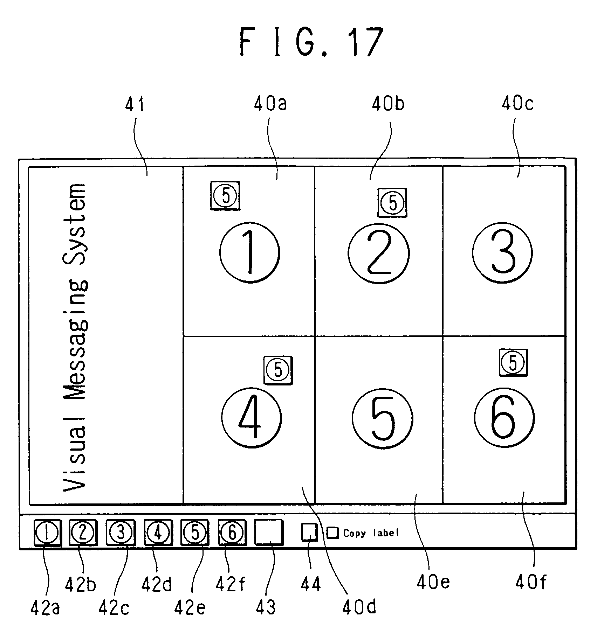

An application example of the message system according to the present invention will be described. The system according to the embodiment 2 of the present invention is a simulation of a mail box (post office box). Each user has their own post office box (areas denoted by 40a - 40f in Fig. 17) and the icons 42a - 42f. This post office box system is a good example of a system for performing communication and joint work among a relatively small group (e.g. 5 to 10 individuals).

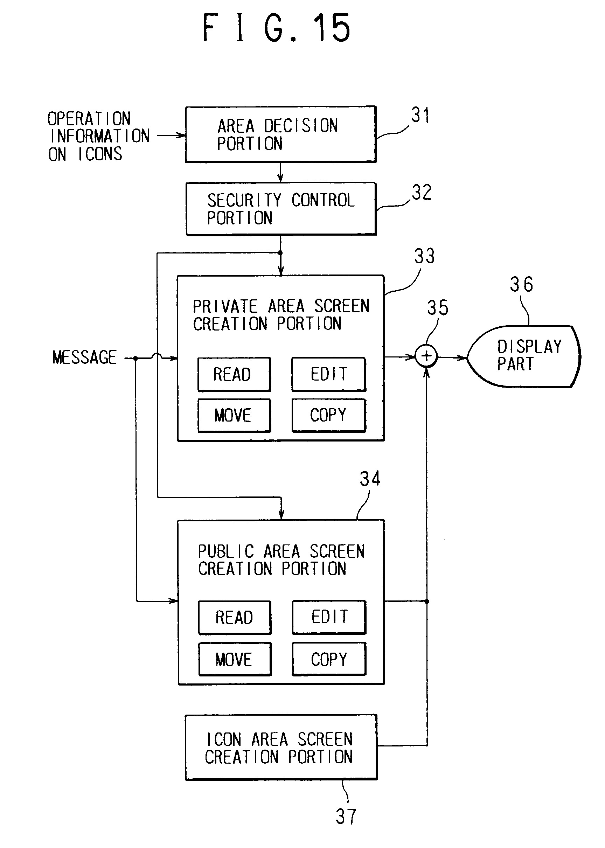

Fig. 15 shows the functional blocks of this system. Fig. 15 shows the security control portion and the image display part of the system. The private area screen creation portion 33 creates a screen for each user area 40 a - 40f. The private area screen creation portion 33 may be disposed corresponding to each user area 40a - 40f. The private area screen creation portion 33 has functions to read, edit, move and copy icons. These functions are executed according to permission from the security control portion 32. The public area screen creation portion 34, on the other hand, generates a screen of the public area 41. In this area, a user can freely operate any icon. Operation information on icons is input to the area decision portion 31 where it is decided in which area an icon is to be operated. Based on this decision result, the security control portion 32 decides whether operation for an icon will be permitted. This output is sent to each one of the private area screen creation portions 33. When security control is required for the public area, this output is also sent to the public area screen creation portion 34. The output of the screen creation portions 33 and 34 are synthesized by the synthesis part 35, and is displayed on the display part 36.

To send a message to another member in the system according to the embodiment 2 of the present invention, the user drags his own icon (e.g. user in area 40e drags the icon 42e) to the destination post office box (e.g. area 40a, 40b, 40d or 40f). Only the receiver can read the message of this icon. Other users cannot read, move or delete this message. The public area 41 at the left is for all users, and anyone can read, move or delete a message placed in this area. Naturally it is possible to design such that only the administrator can move and delete the message in order to increase the security function, just like the case of a message board. Emergency icon 43 may be dragged to a message board for an emergency message. In this case, the message itself, not the icon, may be displayed. Also to send a message to a plurality of destinations, an icon is copied and moved to the areas of the destination users.

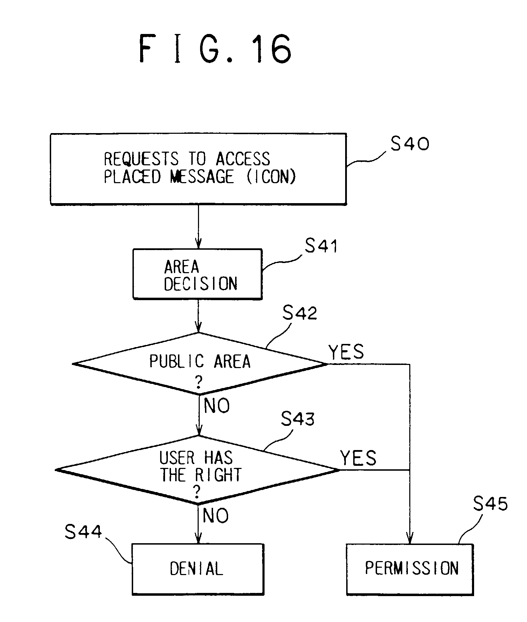

Fig. 16 shows a flow chart on security. When access to a dropped message (icon) is requested (S40), the area is judged first (S41). If the decided area is a public area, access is permitted (S45). Otherwise it is checked whether the user has the right to access the area (S43), and if so, access is permitted (S45), and if not, access is denied.

According to the system of the embodiment 2, a message is handled as an icon, and a message can be transmitted by dragging and dropping an icon, so an interface which is very easily understood can be provided. Also, security control is executed based on the area on the screen, so processing is easy and clearer for the user. Users who are not the receiver cannot read the message, but can know where the icon is located, so a non-receiver user can know which users are exchanging the message.

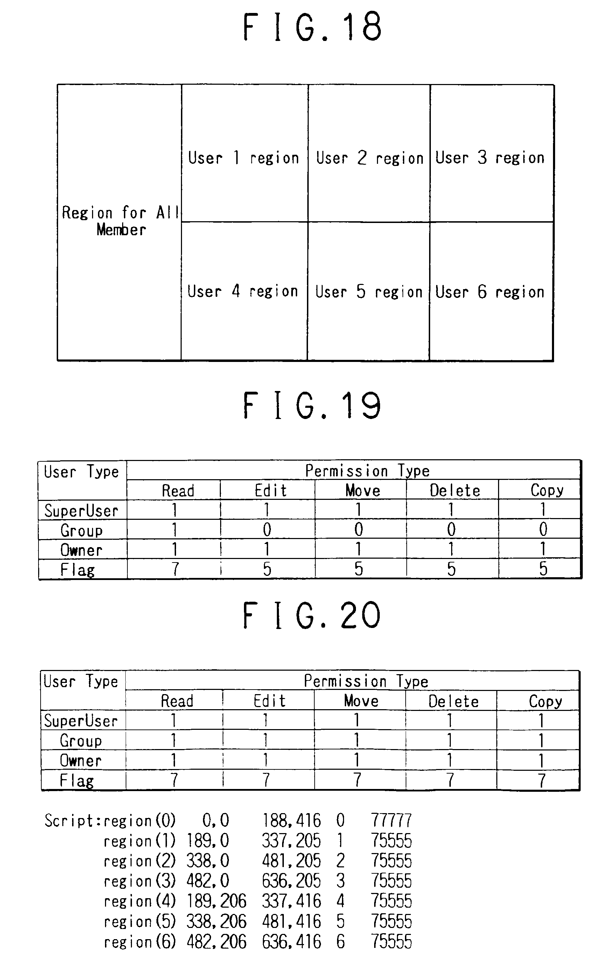

Now the image map definitions of this system will be described. There are six users, each with their own area (Fig. 18). Fig. 18 also shows an area which is for all users. One postit can be fully accessed by all members. Fig. 19 shows the permission flags for each user area. Fig. 20 shows the permission flags for all users.

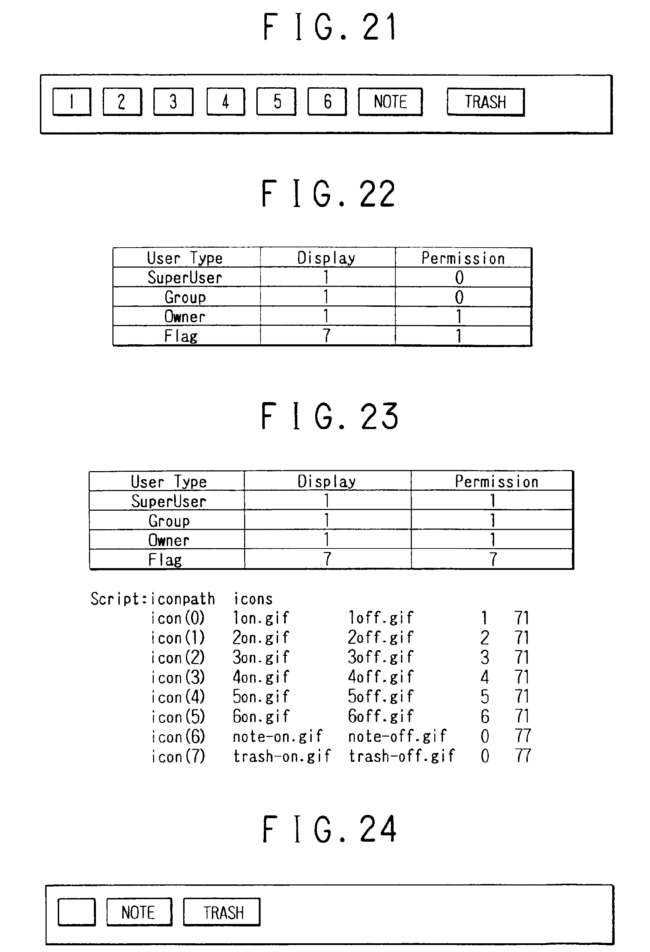

Now the icon definitions of this system will be described. The same icon layout is provided to all users (Fig. 21). Each user sends a message using a respective unique icon. The NOTE and TRASH icons belong to the Super User. Fig. 22 shows the display/permission flags of the user icons. Fig. 23 shows the display/permission flags of the NOTE and TRASH icons.

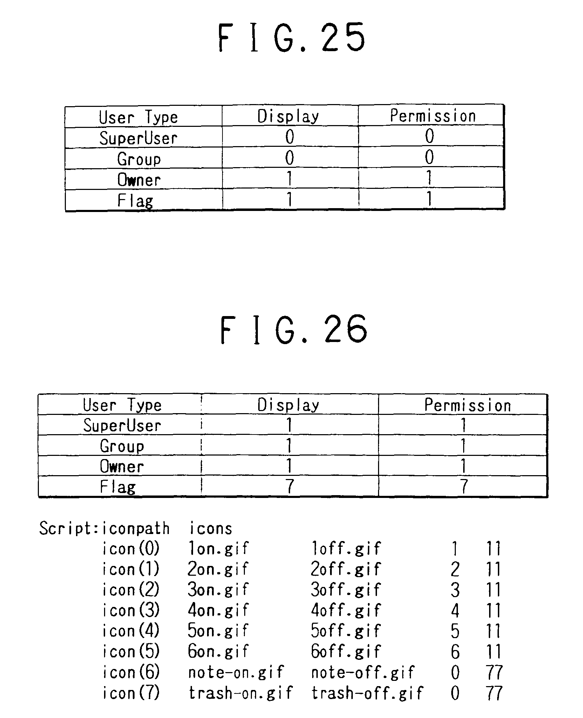

Fig. 24 shows another example of icons. This shows a post office box board having unique user icons. Fig. 25 shows the display/permission flags of each user. Fig. 26 shows the display/permission flags of the NOTE and TRASH icons.

### Embodiment 3

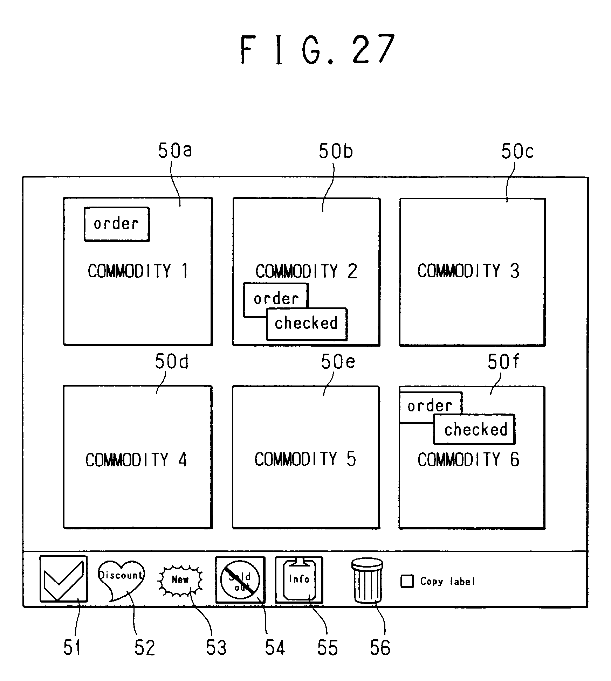

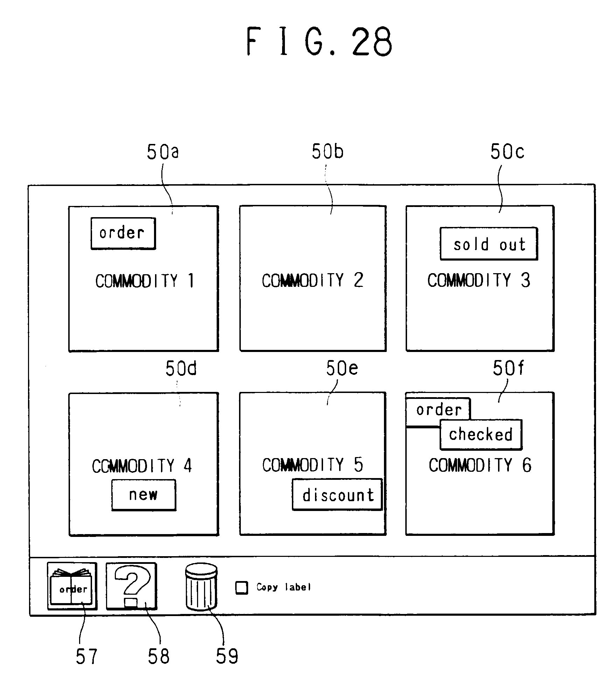

An application example of the message system according to the present invention will be described. Fig. 27 shows a display screen at the shop side, and Fig. 28 shows a display screen at the customer side. The top screen of this order system is similar to an order form, a leaflet, and a pamphlet of a shop. In Fig. 27 and Fig. 28, images 50a - 50f of a total of six commodities are displayed. These images correspond to a menu. An icon bar is below these images. In Fig. 27, the icon bar has an icon 51 for the shop to confirm an order, an icon 52 to indicate a discount, an icon 53 to indicate a new commodity, an icon 54 to indicate sold out, an icon 55 to indicate other information, and a trash can icon 56. In Fig. 28, on the other hand, the icon bar has an icon 57 for the customer side to place an order, an icon 58 for questions about a commodity, and a trash can icon 59.

This system is essentially the same as the above mentioned embodiments 1 and 2, but is somewhat different in terms of security. The icons 51, 52, 53, 54 and 55 for the shop can be accessed only by users at the shop side, and the icons 57 and 58 for a customer can be accessed only by a customer. If there are a plurality of customers, needless to say a customer cannot access the icons of another customer. Therefore, in this system, the icons of the customer should be displayed on the screen of that respective customer, but the icons of another customer need not be displayed. It is easier to view a screen and operate the screen if only the customer's own icons are displayed. On the screen at the shop side, however, the icons of all customers should be displayed.

When ordering, the order icon 57 is dragged to one of the commodities 50a - 50f on the menu board, and the order content, name, address, and other necessary information on the order are written. To establish security between the customer who places an order and the shop, the other customers are prohibited to read, move, delete or copy this order. When a shop accepts this order, an employee of the shop drags the acceptance icon 51, and writes such a message as "we will deliver the product within 30 minutes", and drags and drops the acceptance icon 51 over the order icon 57.

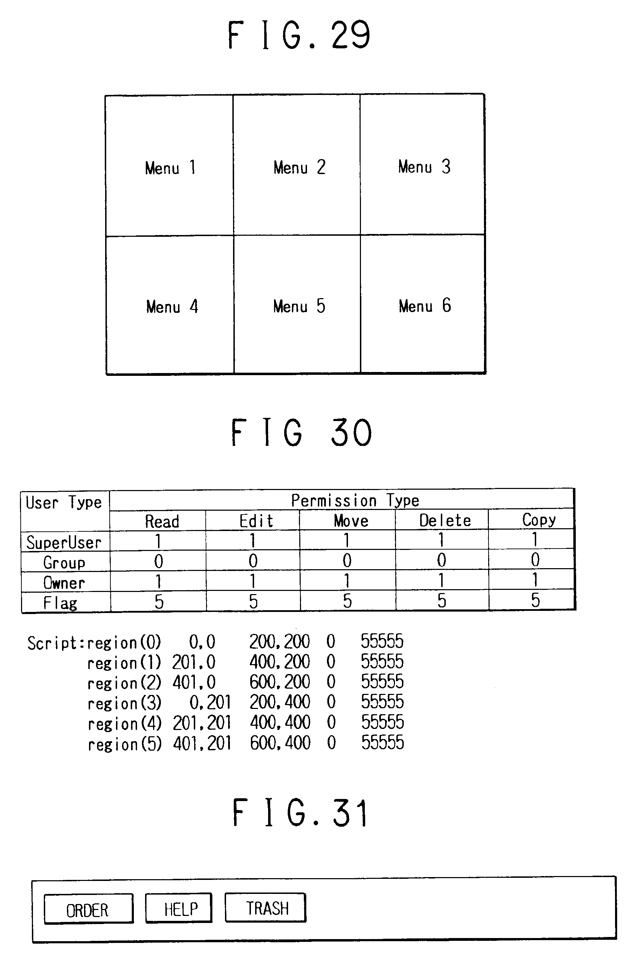

When some commodities in a menu are new, discounted or sold out, the shop places such attribute icons as 52 - 55 in the menu. In this way, orders can be placed very easily. The shop can set various information, such as shop holidays, by dragging information icons as if using postits. Now the image map definitions will be described. The number of users is unknown or limitless. All areas of each menu belongs to the Super User. Only the sender and the Super User (= receiver = owner) are allowed full access (see Fig. 29 and Fig. 30).

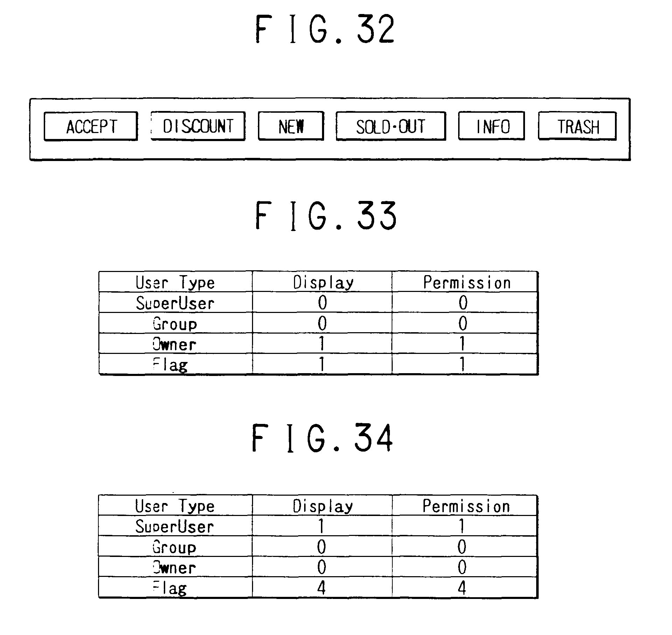

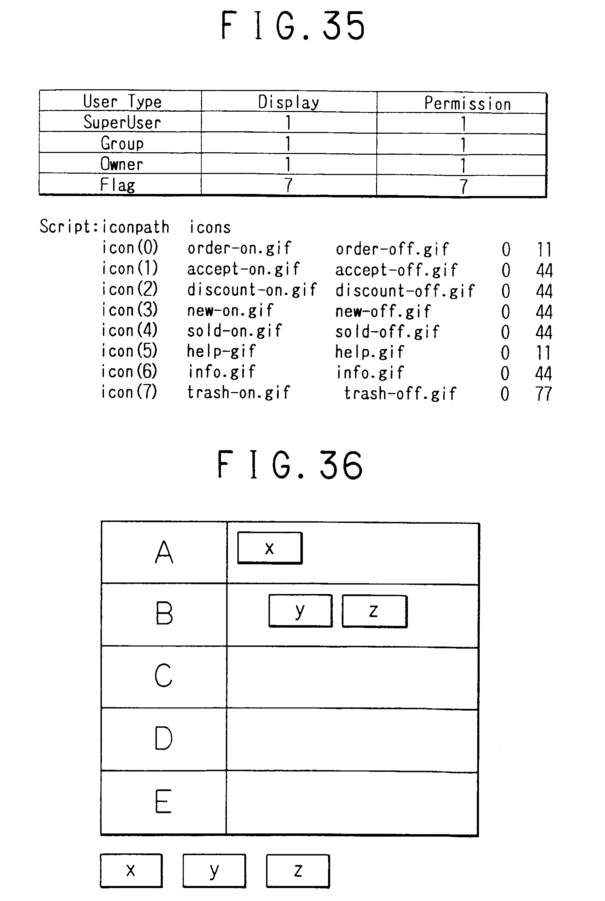

Now the icon definitions will be described. The number of users is unknown or limitless. Icon layout is different between a customer and a shop (see Fig. 31 and Fig. 32). Fig. 33 shows an example of the display/permission flags of a customer (ORDER and HELP icons). Fig. 34 shows an example of the display/permission flags of a shop (ACCEPT, DISCOUNT, NEW, and INFO icons). Fig. 35 shows an example of the display/permission flag of a trash can icon.

### Embodiment 4

Application examples when the present invention is applied to a device other than the above will be described.

Fig. 36 is an example when the present invention is applied to a destination display panel. In Fig. 36, each one of employees A, B, C and D has their own display area, and predetermined icons x, y and z are placed in this area. These icons, x, y and z, correspond, for example, to the destination an employee has embarked for. In a work place, usually a white board is used to indicate the destination of an employee. Before an employee departs, that employee writes their destination and return time to the company on the white board using such a writing tool as a magic marker. If this invention is used, a destination display panel having the same functions as a white board can be constructed on the client server system. For example, when Mr. A departs his company, he places icon x, corresponding to the destination, in his area by dragging and dropping the icon x from the icon bar. If necessary, Mr. A writes a message indicating the return time and other important matters in the icon. By such a simple operation, destinations can be displayed. By constructing a destination display panel on the client server system, a photographic destination display can be confirmed by anyone at any location. It is preferable that, excluding the administrator, dragging and dropping an icon are possible only in the user's own area.

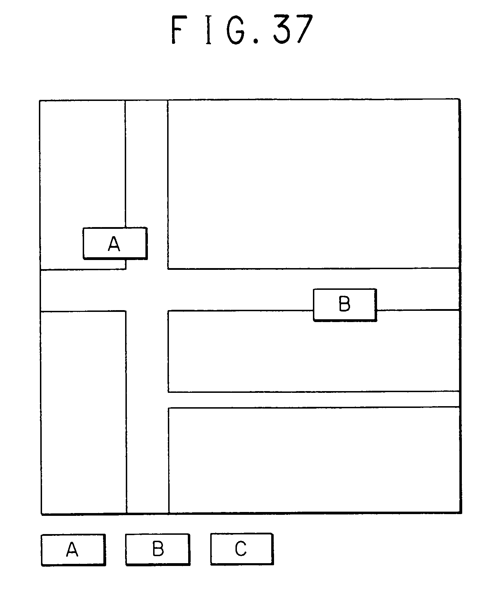

Fig. 37 is an example when the present invention is applied to a position information display panel. In Fig. 37, the current position of Mr. A and the current position of Mr. B are displayed on the screen where a map is displayed. When the user knows their own position, that user drags and drops their own icon. If the user does not know their own position, an individual who does know the position drags and drops the corresponding icon. This icon may be automatically set up using GPS, for example.

The present invention can be applied to the games of go, shogi and chess. In other words, a player can place a game piece icon in an appropriate position on the screen of the present invention by dragging and dropping via the Internet. According to this system, the game can be easily viewed. As for security, a player can access only their own game piece icons. Spectators cannot access the game piece icons at all.

## Claims

1. A client server system comprising a server and a plurality of clients which are connected to said server via communication lines, wherein
common screens are displayed on said server and said plurality of clients;
common icons are displayed on the screens of said server and said plurality of clients,
said client server system has mapping which can divide areas in the background, and
said common screens and said common icons of said server and said plurality of clients are created and displayed according to said mapping.

2. A client server system, comprising a server and a plurality of clients connected to said server via communication lines, wherein
said server further comprises a transmit /receive portion, an icon transfer portion which transfers an icon received by said transmit/receive portion to another client, and a screen creation portion which receives an icon from said transmit/receive portion and creates a message board screen,
said client further comprises a transmit /receive portion, an icon creation portion which sends a transmission icon to said transmit/receive portion, and a screen creation portion which receives an icon received by said transmit /receive portion and/or an icon created by said icon creation portion and creates a message board screen,
when said client has newly created an icon, said client displays said icon on its own message board screen and sends said icon to said server, and
said server receives said icon, displays said icon on its own message board screen, and transfers said icon to another client.

3. The client server system according to Claim 2, wherein, when the icon is received, said server judges the attributes of the received icon, sends the icon to a corresponding client if the icon is a private icon, and sends the icon to all the clients if the icon is a multiple address message.

4. The client server system according to Claim 2, wherein said server and/or said client further comprises a private area screen creation portion which creates a private area screen where access is allowed only for specified persons, a public area creation portion which creates a public area screen where access is allowed for all participants, an area decision portion which receives operational information on said icon and decides which one of said private area screen and said public area screen this operation was executed in, and a security control portion which allows access to said icon based on the result of the decision by said area decision portion.

5. The client server system according to Claim 4, wherein the types of said access are read, edit, move, delete and copy.

6. The client server system according to Claim 4, wherein said private area screen is provided to each client.

7. The client server system according to Claim 4, wherein said public area screen corresponds to a public bulletin board.

8. The client server system according to Claim 4, wherein said security control portion comprises a permission table which shows the relationship between a user type and a permission type, and decides whether access is permitted/denied based on said table.

9. The client server system according to Claim 4, wherein said icon can be moved inside or between the private area screen and/or the public area screen by a drag and drop operation, and the area where said icon is placed corresponds to the destination of said icon and/or message.

10. The client server system according to Claim 9, wherein said icons are provided in an icon bar on the display screen in advance, and can be placed in an arbitrary area from said icon bar by a drag and drop operation.

11. An authoring tool for a client server system comprising a server and a plurality of clients connected to said server via communication lines, wherein
common screens are displayed on said server and said plurality of clients,
common icons are displayed on the screens of said server and said plurality of clients,
said common screens and said common icons of said server and said plurality of clients are created and displayed according to mapping,
said mapping comprises an area table where a screen is divided and defined as one or more areas, and a permission table where security is set for each combination of a user type and an access permission type, and
an application is generated by setting said area table and said permission table.

12. A messaging system for a client server system comprising a server and a plurality of clients connected to said server via communication lines, wherein
said server further comprises a transmit /receive portion, an icon transfer portion which transfers an icon received by said transmit /receive portion to another client, and a screen creation portion which receives an icon from said transmit/receive portion and creates a message board screen,
said client further comprises a transmit /receive portion, an icon creation portion which sends a transmission icon to said transmit /receive portion, and a screen creation portion which receives an icon received by said transmit/receive portion and/or an icon created by said icon creation portion and creates a message board screen,
when said client has newly created an icon, said client displays said icon on its own message board screen and sends said icon to said server,
said server receives said icon, displays said icon on its own message board screen, and transfers said icon to another client,
said server and/or said client further comprises a private area screen creation portion which creates a private area screen where access is allowed only for specified persons, a public area creation portion which creates a public area screen where access is allowed for all participants, an icon area screen creation portion which enables one of a plurality of icons provided on the display screen in advance to be placed in an arbitrary area by dragging and dropping said icon, an area decision portion which receives operation information on said icon and decides which one of said private area screen and said public area screen this operation was executed in, and a security control portion which allows access to said icon based on the result of the decision by said area decision portion,
said icon includes a message,
said icon can be moved inside or between the private area screen and/or the public area screen by a drag and drop operation, and the area where said icon is placed is specified as a destination of said message, and
only a client which has obtained permission from said security control portion can read said message.

13. An order system for a client server system comprising a server and a plurality of clients connected to said server via communication lines, wherein
said server further comprises a transmit /receive portion, and a screen creation portion which receives an icon from said transmit /receive portion and creates a message board screen,
said client further comprises a transmit/receive portion, an icon creation portion which sends a transmission icon to said transmit/receive portion, and a screen creation portion which receives an icon received by said transmit/receive portion and/or an icon created by said icon creation portion, and creates a message board screen,
when said client has newly created an icon, said client displays said icon on its own message board screen and sends said icon to said server,
said server receives said icon and displays said icon on its own message board screen,
said client further comprises an information area creation portion for creating an information area screen to display information on commodities, and an icon area screen creation portion for enabling an order icon provided on the display screen in advance to be placed in one of said information areas by dragging and dropping, and
said server further comprises an information area creation portion for creating an information area screen to display information on commodities, and an icon area screen creation portion for allowing an order conformation icon provided on the display screen in advance to be placed in association with said order icon by dragging and dropping.
